(19) Europäisches Patentamt
European Patent Office
Office européen des brevets

(11) Veröffentlichungsnummer: **0 372 328 B1**

(12) **EUROPÄISCHE PATENTSCHRIFT**

(45) Veröffentlichungstag der Patentschrift: **02.02.94**

(51) Int. Cl.[5]: **C08F 4/69**, C08F 4/603, C08F 10/02

(21) Anmeldenummer: **89121781.2**

(22) Anmeldetag: **25.11.89**

(54) **Verfahren zum Herstellen von Homo- sowie Copolymerisaten des Ethens durch Phillips-Katalyse.**

(30) Priorität: **09.12.88 DE 3841436**

(43) Veröffentlichungstag der Anmeldung:
**13.06.90 Patentblatt 90/24**

(45) Bekanntmachung des Hinweises auf die Patenterteilung:
**02.02.94 Patentblatt 94/05**

(84) Benannte Vertragsstaaten:
**AT BE DE ES FR GB IT NL**

(56) Entgegenhaltungen:
**EP-A- 0 264 895**
**FR-A- 2 303 812**
**GB-A- 2 001 329**

(73) Patentinhaber: **BASF Aktiengesellschaft**
**Carl-Bosch-Strasse 38**
**D-67063 Ludwigshafen(DE)**

(72) Erfinder: **Weber, Siegfried, Dr.**
**Peter-Nickel-Strasse 5**
**D-6940 Weinheim(DE)**
Erfinder: **Funk, Guido, Dr.**
**Dürerstrasse 5**
**D-6520 Worms 1(DE)**

**EP 0 372 328 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung liegt im Rahmen eines Verfahrens zum Herstellen von Ethen-Homopolymerisaten sowie Ethen-Copolymerisaten mit untergeordneten Mengen an einpolymerisierten $C_3$- bis $C_{12}$-, insbesondere $C_3$- bis $C_8$-$\alpha$-Monoalkenen durch Polymerisation des bzw. der Monomeren bei Temperaturen von 30 bis 150, insbesondere 60 bis 120 °C und Drücken von 2 bis 150, insbesondere von 5 bis 60 bar, durch Phillips-Katalyse mittels

(1) eines Trägerkatalysators aus einem Trägerstoff, der mit oxidisch vorliegendem Chrom, oxidisch vorliegendem Phosphor sowie oxidisch vorliegendem Aluminium beladen ist und

(2) eines Cokatalysators,

wobei der Trägerkatalysator (1) erhalten worden ist, indem man

(1.1) in einer ersten Stufe ein mit den gewünschten Mengen Chrom, Phosphor sowie Aluminium beladenes Katalysator-Vorprodukt (1.1) herstellt aus

(1.1.a) einem feinteiligen, porösen silikatischen Trägerstoff,

(1.1.b) einer ausgewählten, spezifischen Chromverbindung,

(1.1.c) einer ausgewählten, spezifischen Phosphorverbindung sowie

(1.1.d) einer ausgewählten, spezifischen Aluminiumverbindung,

und dann

(1.2) in einer zweiten Stufe das aus der ersten Stufe erhaltene Katalysator-Vorprodukt (1.1) in einem wasserfreien, Sauerstoff in einer Konzentration von über 10 Vol.% enthaltene Gasstrom 10 bis 1000, insbesondere 60 bis 300 Minuten auf einer Temperatur von 300 bis 900, insbesondere 500 bis 800 °C hält (d.h. "calziniert" bzw. "aktiviert") und

(1.3) die so aktivierte Katalysatorvorstufe mit ausgewählten Boralkylen zum eigentlichen Trägerkatalysator (1) umsetzt.

Polymerisationsverfahren dieser Gattung sind bekannt, wobei im gegebenen Zusammenhang als repräsentativ das in der EP-A-264 895 beschriebene gelten kann.

Ein signifikantes Merkmal dieses Verfahrens ist, daß Trägerkatalysatoren eingesetzt werden, die durch Beladen eines silikatischen Trägerstoffs mit ausgewählten Chrom-, Phosphor- und Aluminiumverbindungen erhalten werden. Die so erhaltenen Zwischenstufen werden einer Hitzebehandlung - d.h. einer Calcination - unterworfen und die hierbei gewonnenen Feststoffkatalysatoren werden mit den beiden Cokatalysatoren Lithium- und Boralkyl in der Polymerisation eingesetzt.

Das im vorstehenden abgehandelte Polymerisationsverfahren liefert zwar mit befriedigender Produktivität Polymerisate mit variabler Molmassenverteilung und einem erhöhten Schmelzindex, doch ist die Produktmorphologie nicht zufriedenstellend, d.h. der Anteil des Feinstaubs im Polymerisat ist sehr hoch.

Hier setzt die Aufgabe an, die zur vorliegenden Erfindung geführt hat: Ein Verfahren der eingangs definierten Art so weiterzubilden, daß es den vorstehend beschriebenen Nachteil nicht oder in erheblich vermindertem Maß aufweist und die positiven Eigenschaften des in der EP-A-264 895 beschriebenen Verfahrens beibehält.

Es wurde gefunden, daß diese Aufgabe gelöst werden kann, wenn man bei dem in Rede stehenden Polymerisationsverfahren

(1) einen Trägerkatalysator einsetzt, der erhalten worden ist, indem man - jeweils in der Art und nach der Weise spezifisch - (1.1) in einer ersten Stufe (1.1.1) zunächst aus (1.1.1.1) einem feinteiligen silikatischen Trägerstoff und (1.1.1.2) einem inerten organischen Lösungsmittel eine Suspension herstellt, (1.1.2) dann (1.1.2.1) in einem inerten organischen Lösungsmittel (1.1.2.2) eine Chromverbindung der Formel $Cr^{3+}(RCO\text{-}CR^1\text{-}COR)_3^-$ , worin stehen R für eine Alkylgruppe und $R^1$ für eine Alkylgruppe oder Wasserstoff, (1.1.2.3) mit einer Aluminiumverbindung der Formel $AlR_3^2$ , worin $R^2$ steht für eine Alkylgruppe, vereinigt, (1.1.3) hierauf (1.1.3.1) die aus (1.1.1) resultierende Suspension mit (1.1.3.2) einer Phosphorverbindung der Formel $P(O)(OR^3)_3$ oder $P(O)H(OR^3)_2$ - worin $R^3$ steht für eine Alkyl-, Aryl- oder Cycloalkylgruppe oder für Wasserstoff, mit der Maßgabe, daß mindestens ein R nicht für Wasserstoff steht - und (1.1.3.3) dem aus (1.1.2) erhaltenen Produkt vereinigt, und (1.1.4) schließlich die in (1.1.3) gewonnene Suspension bis zur Trockene eindampft, und dann (1.2) in der zweiten Stufe zunächst (1.2.1) das aus der ersten Stufe (1.1) erhaltene Katalysator-Vorprodukt mit einem Stickstoffstrom behandelt, hierauf (1.2.2) das aus (1.2.1) erhaltene Zwischenprodukt in einem Sauerstoff enthaltenden Gasstrom erhitzt, und schließlich (1.2.3) das aus (1.2.2) erhaltene Zwischenprodukt mit einem Stickstoffstrom behandelt, und

1.3 die so erhaltene Katalysatorvorstufe mit einer Borverbindung der Formel $BR_3^4$ , worin $R^4$ steht für eine Alkylgruppe, in einem inerten Lösungsmittel umsetzt sowie

(2) als Cokatalysator ein Lithiumalkyl verwendet.

Gegenstand der vorliegenden Erfindung ist dementsprechend ein Verfahren zum Herstellen von Ethen-Homopolymerisaten sowie Ethen-Copolymerisaten mit untergeordneten Mengen an einpolymerisierten $C_3$- bis $C_{12}$-, insbesondere $C_3$- bis $C_8$-$\alpha$-Monoalkenen durch Polymerisation des bzw. der Monomeren bei Temperaturen von 30 bis 150, insbesondere 60 bis 120 °C und Drücken von 2 bis 150, insbesondere 5 bis 60 bar, durch Phillips-Katalyse mittels

(1) eines Trägerkatalysators aus einem Trägerstoff, der mit oxidisch vorliegendem Chrom, oxidisch vorliegendem Phosphor sowie oxidisch vorliegendem Aluminium beladen ist, und anschließend mit Boralkyl umgesetzt wird

(2) eines Cokatalysators,

wobei der Trägerkatalysator (1) erhalten worden ist, indem man

(1.1) in einer ersten Stufe ein mit den gewünschten Mengen Chrom, Phosphor sowie Aluminium beladenes Katalysator-Vorprodukt (1.1) herstellt aus

(1.1.a) einem feinteiligen, porösen, silikatischen Trägerstoff,

(1.1.b) einer ausgewählten, spezifischen Chromverbindung,

(1.1.c) einer ausgewählten, spezifischen Phosphorverbindung sowie

(1.1.d) einer ausgewählten, spezifischen Aluminiumverbindung

und dann

(1.2) in einer zweiten Stufe das aus der ersten Stufe erhaltene Katalysator-Vorprodukt (1.1) in einem wasserfreien, Sauerstoff in einer Konzentration von über 10 Vol.% enthaltenen Gasstrom 10 bis 1000, insbesondere 60 bis 300 Minuten auf einer Temperatur von 300 bis 900, insbesondere 500 bis 800 °C hält (d.h. ,"calziniert", bzw. ,"aktiviert"), und

(1.3) die so aktivierte Katalysatorvorstufe mit ausgewählten Boralkylen zum eigentlichen Trägerkatalysator (1) umsetzt.

Das erfindungsgemäße Verfahren ist dadurch gekennzeichnet, daß man

(1) einen Trägerkatalysator einsetzt, der erhalten worden ist, indem man

(1.1) in einer ersten Stufe ein Katalysator-Vorprodukt herstellt, indem man zunächst

(1.1.1) in einer ersten Unterstufe aus

(1.1.1.1) einem feinteiligen, porösen, silikatischen Trägertoff, der einen Teilchendurchmesser von 1 bis 400, vorzugsweise 10 bis 200 µm, ein Porenvolumen von 0,5 bis 3, vorzugsweise 1 bis 2,5 $cm^3/g$ sowie eine Oberfläche von 1000, vorzugsweise 200 bis 700 $m^2/g$ besitzt, und

(1.1.1.2) einem inerten organischen Lösungsmittel, vorzugsweise einem flüssig vorliegenden aliphatischen, cycloaliphatischen oder aromatischen Kohlenwasserstoff, und insbesondere einem $C_5$- bis $C_7$-Alkan,

unter guter Durchmischung eine Suspension herstellt, mit der Maßgabe, daß auf 100 Gewichtsteile des Trägerstoffs (1.1.1.1) 150 bis 5000, vorzugsweise 200 bis 1000 Gewichtsteile des Lösungsmittels (1.1.1.2) entfallen, dann

(1.1.2) in einer zweiten Unterstufe

(1.1.2.1) in einem Lösungsmittel der unter (1.1.1.2) bezeichneten Art

(1.1.2.2) eine Chromverbindung der Formel

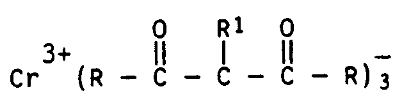

,

worin stehen

R für eine Alkylgruppe, die nicht mehr als 12, vorzugsweise nicht mehr als 4 Kohlenstoffatome aufweist, insbesondere die Methylgruppe, und

$R^1$ für eine Alkylgruppe, die nicht mehr als 12, vorzugsweise nicht mehr als 4 Kohlenstoffatome aufweist, oder insbesondere für Wasserstoff,

(1.1.2.3) mit einer Aluminiumverbindung der Formel $AlR^2_3$ - worin $R^2$ steht für eine Alkylgruppe, die nicht mehr als 12, vorzugsweise 2 bis 4 Kohlenstoffatome aufweist, insbesondere die iso-Butylgruppe -

unter guter Durchmischung bei einer Temperatur von 0 bis 100, vorzugsweise 20 bis 50 °C vereinigt, mit der Maßgabe, daß auf 1 Gewichtsteil Chrom aus der Chromverbindung (1.1.2.2) 0,5 bis 10, vorzugsweise 1 bis 3 Gewichtsteile Aluminium aus der Aluminiumverbindung (1.1.2.3) sowie 5 bis 500, vorzugsweise 50 bis 300 Gewichtsteile Lösungsmittel (1.1.2.1) entfallen, und das Ganze 5 bis 300, vorzugsweise 20 bis 60 Minuten bei der genannten Temperatur hält, hierauf

(1.1.3) in einer dritten Unterstufe

(1.1.3.1) die aus Unterstufe (1.1.1) resultierende Suspension mit

(1.1.3.2) einer Phosphorverbindung der Formel $P(O)(OR^3)_3$ oder $P(O)H(OR^3)_2$ - worin $R^3$ steht für eine Alkyl-, Aryl- oder Cycloalkylgruppe, die nicht mehr als 12, vorzugsweise nicht mehr als 6 Kohlenstoffatome aufweist oder für Wasserstoff und insbesondere eine $C_2$- bis $C_4$-Alkylgruppe oder Wasserstoff, mit der Maßgabe, daß mindestens ein R nicht für Wasserstoff steht - und

(1.1.3.3) dem aus Unterstufe (1.1.2) erhaltenen Produkt

unter guter Durchmischung bei einer Temperatur von 0 bis 60, vorzugsweise 10 bis 30 °C vereinigt, mit der Maßgabe, daß auf 100 Gewichtsteile des Trägerstoffs (1.1.1.1) 0,1 bis 5, vorzugsweise 0,5 bis 2 Gewichtsteile Chrom aus der Chromverbindung (1.1.2.2) sowie 0,5 bis 10, vorzugsweise 1 bis 3 Gew.% Phosphor aus der Phosphorverbindung (1.1.3.2.) entfallen, und das Ganze 5 bis 300, vorzugsweise 20 bis 60 Minuten bei der genannten Temperatur hält, und schließlich

(1.1.4) in einer vierten Unterstufe die in Unterstufe (1.1.3) gewonnene Suspension bei einer Temperatur von nicht mehr als 150, vorzugsweise nicht mehr als 80 °C - gegebenenfalls unter vermindertem Druck - bis zur Trockene eindampft,

und dann

(1.2) in einer zweiten Stufe das aus der ersten Stufe (1.1) erhaltene Zwischenprodukt in das Katalysatorvorprodukt überführt, indem man zunächst

(1.2.1) in einer ersten Unterstufe das aus der ersten Stufe (1.1) erhaltene Katalysator-Vorprodukt in einem wasserfreien Stickstoffstrom 60 bis 500, insbesondere 100 bis 300 Minuten auf einer Temperatur von 150 bis 300, insbesondere 200 bis 270 °C hält, hierauf

(1.2.2) in einer zweiten Unterstufe das aus Unterstufe (1.2.1) erhaltene Zwischenprodukt in einem wasserfreien, Sauerstoff in einer Konzentration von über 10 Vol.% enthaltenen Gasstrom 10 bis 1000, insbesondere 60 bis 300 Minuten auf einer Temperatur von 300 bis 900, insbesondere 500 bis 800 °C hält, und schließlich

(1.2.3) in einer dritten Unterstufe das aus Unterstufe (1.2.2) erhaltene Zwischenprodukt in einem wasserfreien Stickstoffstrom 10 bis 300, insbesondere 30 bis 150 Minuten auf einer Temperatur von 50 bis 400, insbesondere 100 bis 270 °C hält, sowie

(1.3) in einer dritten Stufe das aus der zweiten Stufe (1.2) erhaltene Katalysatorvorprodukt in den eigentlichen Trägerkatalysator überführt, indem man zunächst

(1.3.1) in einer ersten Unterstufe das aus der zweiten Unterstufe (1.2) erhaltene Katalysatorvorprodukt in einem inerten Lösungsmittel, vorzugsweise aliphatischen $C_3$-$C_{12}$-Kohlenwasserstoff suspendiert und

(1.3.2) in einer zweiten Unterstufe die aus Unterstufe (1.3.1) erhaltene Suspension mit einem Boralkyl der Formel $BR^4_3$ - worin steht $R^4$ für eine $C_1$-$C_{12}$-, insbesondere eine $C_2$-$C_4$-Alkylgruppe und wobei das Atomverhältnis Chrom in der Katalysatorvorstufe (1.2) : Bor 1:0,01 bis 1:1, vorzugsweise 1:0,1 bis 1:1 ist - bei Temperaturen von -40 bis 100 °C umsetzt und

(2) als Cokatalysator ein Lithiumalkyl der Formel $LiR^5$ - worin steht $R^5$ für eine $C_1$- bis $C_{12}$-, insbesondere eine $C_2$- bis $C_4$-Alkylgruppe, wobei das Atomverhältnis von Chrom im Trägerkatalysator (1) zu Li im Cokatalysator (2) größer als 1:100 und insbesondere 1:1 bis 1:20 ist.

Zu dem erfindungsgemäßen Polymerisationsverfahren in seinem Gesamtaspekt ist das Folgende zu sagen:

Das Polymerisationsverfahren als solches kann - unter Beachtung der erfindungsgemäßen Besonderheit - in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder Trockenphasen-Polymerisations verfahren im gerührten oder gewirbelten Bett. Die erwähnten technologischen Ausgestaltungen - mit anderen Worten: die technologischen Varianten der Polymerisation von Olefinen nach Phillips - sind aus der Literatur und Praxis wohlbekannt, so daß sich insoweit nähere Ausführungen zu ihnen erübrigen.

Es ist indes hervorzuheben, daß die erfindungsgemäße Arbeitsweise vorzugsweise durchgeführt wird im Rahmen eines Verfahrens zum kontinuierlichen Herstellen partikelförmiger Homopolymerisate oder Copolymerisate durch Polymerisation des bzw. der Monomeren in einem flüssig vorliegenden $C_4$-bis $C_5$-Alkan - worin sich das zu polymerisierende Monomere bzw. Monomerengemisch in gelöster Form, das gebildete partikelförmige Polymerisat in suspendierter Form befinden - als Reaktionsmedium, - gegebenenfalls - in Gegenwart eines Antistatikums als Wandbelagverhinderungsmittel ("anti fouling agent") sowie - gegebenenfalls - von Wasserstoff als Molekulargewichtsregler, unter Führen des Reaktionsgemischs als Kreisstrom, welchem die Ausgangsstoffe zugegeben werden und das gebildete partikelförmige Polymerisat entzogen

wird. Polymerisationsverfahren dieser Gattung, d.h. Verfahren zum Herstellen von Homo- und Copolymerisaten des Ethylens durch Suspensionspolymerisation des bzw. der Monomeren in einem flüssig vorliegenden Alkan, sind in mannigfachen Ausgestaltungen bekannt; hierzu kann im gegebenen Zusammenhang auf die in den GB-PS 841 263 und 1 435 965 sowie den US-PS 3 242 150 und 4 007 321 beschriebenen Arbeitsweisen, als exemplarischen Beispielen, verwiesen werden.

Weiterhin ist noch zu bemerken, daß der neue Trägerkatalysator (1) - wie entsprechende bekannte Katalysatoren - z.B. außerhalb oder innerhalb des Polymerisationsraumes mit dem Cokatalysator (2) zusammengebracht werden kann; -im letztgenannten Fall etwa durch räumlich getrennten Eintrag der Komponenten, die im übrigen in Form einer Suspension (Katalysator) bzw. Lösung (Cokatalysator) gehandhabt werden können.

Schließlich ist noch zu sagen, daß sich das neue Polymerisationsverfahren vornehmlich zum Herstellen solcher Ethen-Homopolymerisate sowie Ethen-Copolymerisate - letztere insbesondere mit Propen, Buten-1, Hexen-1, 4-Methylpenten-1 bzw. Octen-1 - eignet, die einen angehobenen Schmelzindex und eine gezielt variierte Molmassenverteilung haben sollen (also Polymerisaten, wie sie z.B. beim Blasformverfahren bevorzugt Anwendung finden), wobei insbesondere eine gute Produktivität, d.h. eine hohe Ausbeute an Polymerisat pro Gewichtseinheit eingesetztem Trägerkatalysator erzielt wird.

Zu dem erfindungsgemäß einzusetzenden neuen Trägerkatalysator (1) selbst ist das Folgende zu sagen:
Seine Herstellung erfolgt in drei Stufen, die oben sowie nachstehend mit (1.1), (1.2) und (1.3) bezeichnet sind.

In der ersten Stufe (1.1) erfolgt die Herstellung des Katalysatorzwischenprodukts über vier Unterstufen (1.1.1), (1.1.2), (1.1.3) und (1.1.4), deren Durchführung für den Fachmann ohne Schwierigkeiten und ohne weiteres möglich ist. Er wird dabei zweckmäßigerweise mit einer Apparatur arbeiten, die eine dauernde, möglichst homogene Durchmischung der jeweiligen Ansätze unter einer inerten Schutzatmosphäre, wie Stickstoffatmosphäre, erlaubt. Er wird ferner zweckmäßigerweise in den Unterstufen (1.1.2) sowie (1.1.3) in dem Lösungsmittel (1.1.2.1) die Chromverbindung (1.1.2.2) mit der Aluminiumverbindung (1.1.2.3), bzw. die Suspension (1.1.3.1) mit der Phosphorverbindung (1.1.3.2) und dem Produkt (1.1.3.3) nicht schlagartig, sondern eher allmählich umsetzen, z.B. unter Vorlegen der einen und langsames Einbringen der übrigen Komponenten. Schließlich wird er den Eindampfvorgang in Unterstufe (1.1.4) schonend gestalten, - wozu sich z.B. Rotationsverdampfer anbieten.

In der zweiten Stufe (1.2) wird das aus der ersten Stufe (1.1) erhaltene Zwischenprodukt im Zuge von drei Unterstufen (1.2.1), (1.2.2) und (1.2.3) in die Katalysatorvorstufe übergeführt. Auch die Durchführung dieser Verfahrensschritte ist für den Fachmann ohne Schwierigkeiten und ohne weiteres möglich. Die hierzu zweckmäßigen Vorrichtungen und Arbeitsmethoden sind die zum ,"Calzinieren" bzw. ,"Aktivieren" von Phillips-Trägerkatalysatoren üblichen und an sich wohlbekannten. Dies bedeutet für die zweite Unterstufe (1.2.2), daß Bedingungen zu wählen sind, die gewährleisten, daß die aktivierte Katalysatorvorstufe das Chrom, zumindest teilweise, im sechswertigen Zustand vorliegt; insoweit ist hier also gegenüber dem Stand der Technik keine Besonderheit gegeben.

In der dritten Stufe (1.3) wird die aus der Stufe (1.2) erhaltene Katalysatorvorstufe in zwei Unterstufen (1.3.1) und (1.3.2) in den eigentlichen Trägerkatalysator übergeführt. Während die Beeinflussung der Polymerisation, insbesondere die Steuerung der Molmassenverteilung und die Erhöhung des Schmelzindexes, über die Zugabe von größeren Boralkylmengen bei der Polymerisation für den Fachmann aus der EP-A-264 895 naheliegt, liegt die erfindungsgemäße Besonderheit der dritten Stufe (1.3) darin, daß mit relativ geringen Boralkylmengen (Atomverhältnis Cr in der Katalysatorvorstufe (1.2) : Bor = 1:0,01 bis 1:1, vorzugsweise 1:0,1 bis 1:1) die Katalysatorvorstufe (1.2) vor und unabhängig von der Polymerisation zum erfindungsgemäßen Trägerkatalysator (1) reduziert wird und somit kein freis Boralkyl als Cokatalysator in den Polymerisationsreaktor dosiert wird.

Der erfindungsgemäße Trägerkatalysator kann in inerten Lösungsmitteln als Suspension oder in getrocknetem Zustand gelagert und für Polymerisationen eingesetzt werden.

Die stoffliche Seite des neuen Trägerkatalysators (1) betreffend ist zu sagen, daß bei seiner Herstellung - generell - die Anwesenheit von Wasser soweit wie möglich ausgeschlossen werden sollte. Dies beginnt beim Trägerstoff (1.1.1.1), den man vor seinem Einsatz - wie einschlägig üblich - scharf trocknen sollte, z.B. für 8 Stunden bei einer Temperatur von 140 °C unter einem Druck von 20 Torr. Das gleichfalls einzusetzende inerte organische Lösungsmittel (1.1.1.2) - hier eignen sich vor allem $C_5$- bis $C_7$-Alkane, wie insbesondere n-Heptan, sowie ferner z.B. Pentane, Hexane, incl. Cyclohexan - sollte möglichst weniger als 0,1 Gew.% Wasser enthalten. Die Chromverbindung (1.1.2.2) - hier ist Chrom(III)-acetylacetonat zu bevorzugen - enthält wie die Aluminiumverbindung (1.1.2.3) - hier ist besonders geeignet Triisobutylaluminium, geeignet aber auch z.B. Tri-n-butyl-, Tri-n-propyl-, Triisopropyl- sowie Triethylaluminium - Wasser von Natur aus nur in

unbedeutenden Mengen. Als einzusetzende Phosphorverbindung (1.1.3.2), die ebenfalls maximal 1 Gew.% Wasser enthalten sollte, eignen sich vor allem Diethylphosphit, Dibutylphosphit, Diethylphosphat, Di-n-butylphosphat sowie Triethylphosphat, aber auch z.B. Dimethylphosphit, Diisopropylphosphit, Diphenylphosphit, Diphenylphosphat, Trimethylphosphat sowie Triphenylphosphat sind geeignet.

Für die Umsetzung gemäß 1.3 sind die Boralkyle Triethylbor und Tri-n-butylbor besonders hervorzuheben.

Bei dem erfindungsgemäßen Polymerisationsverfahren ist nicht nur ein Trägerkatalysator (1) einzusetzen, sondern auch ein Cokatalysator (2) in Gestalt eines bestimmten Lithiumalkyls. Namentliche Beispiele für hier besonders geeignete Lithiumalkyle sind n-Butyllithium, sec.-Butyllithium sowie tert.-Butyllithium.

Beispiel

Herstellen des Trägerkatalysators (1)

(1.1) In einer ersten Stufe wird ein Zwischenprodukt hergestellt, indem man zunächst

(1.1.1.) in einer ersten Unterstufe aus

(1.1.1.1) einem feinteiligen, porösen, silikatischen Trägerstoff, der einen Teilchendurchmesser von 50 bis 150 µm, ein Porenvolumen von 1,75 $cm^3/g$ sowie eine Oberfläche von 320 $m^2/g$ besitzt (8 Stunden bei 140 °C und 20 Torr getrocknet), und

(1.1.1.2) wasserfreiem n-Heptan

unter Argonatmosphäre sowie guter Durchmischung mittels Rühren eine Suspension herstellt, mit der Maßgabe, daß auf 100 Gewichtsteile des Trägerstoffs (1.1.1.1) 400 Gew.-Teile des organischen Lösungsmittels (1.1.1.2) entfallen, dann

(1.1.2) in einer zweiten Unterstufe

(1.1.2.1) in dem Lösungsmittel der unter (1.1.1.2) bezeichneten Art

(1.1.2.2) Chrom(III)-acetylacetonat,

(1.1.2.3) mit Triisobutylaluminium

unter guter Durchmischung durch Rühren bei einer Temperatur von 40 °C vereinigt mit der Maßgabe, daß auf 1 Gewichtsteil Chrom aus (1.1.2.2) 2 Gewichtsteile Aluminium aus (1.1.2.3) sowie 100 Gewichtsteile des Lösungsmittels (1.1.2.1) entfallen, und das Ganze 15 Minuten bei der genannten Temperatur hält, hierauf

(1.1.3) in einer dritten Unterstufe

(1.1.3.1) die aus Unterstufe (1.1.1) resultierende Suspension mit

(1.1.3.2) - zunächst - Triethylphosphat und

(1.1.3.3) - anschließend - dem aus Unterstufe (1.1.2) erhaltenen Produkt

unter guter Durchmischung mittels Rühren bei einer Temperatur von 20 °C vereinigt, mit der Maßgabe, daß auf 100 Gewichtsteile des Trägerstoffs (1.1.1.1) 1 Gewichtsteil Chrom aus der Chromverbindung (1.1.2.2) sowie 2 Gewichtsteile Phosphor aus der Phosphorverbindung (1.1.3.2) entfallen, und das Ganze 30 Minuten bei der genannten Temperatur hält, und schließlich

(1.1.4) in einer vierten Unterstufe die in Unterstufe (1.1.3) gewonnene Suspension bei einer Temperatur von bis zu 80 °C unter vermindertem Druck (bis zu 20 Torr) in einem Rotationsverdampfer bis zur Trockene eindampft.

(1.2) In einer zweiten Stufe wird das aus der ersten Stufe (1.1) erhaltene Zwischenprodukt in eine Katalysatorvorstufe überführt, indem man - jeweils mittels eines Fließbettes - zunächst -

(1.2.1) in einer ersten Unterstufe das aus der ersten Stufe (1.1) erhaltene Zwischenprodukt in einem wasserfreien Stickstoffstrom 120 Minuten auf einer Temperatur von 200 °C hält, hierauf

(1.2.2) in einer zweiten Unterstufe das aus Unterstufe (1.2.1) erhaltene Zwischenprodukt in einem wasserfreien Luftstrom 120 Minuten auf einer Temperatur von 600 °C hält, und schließlich

(1.2.3) in einer dritten Unterstufe das aus Unterstufe (1.2.2) erhaltene Zwischenprodukt in einem wasserfreien Stickstoffstrom 60 Minuten auf einer von 250 auf 100 °C sinkenden Temperatur hält und anschließend

(1.3) in einer dritten Stufe die aus der zweiten Unterstufe (1.2) erhaltene und auf Raumtemperatur abgekühlte Katalysatorvorstufe zunächst nach

(1.3.1) in einer ersten Unterstufe bei 30 °C suspendiert, mit der Maßgabe, daß auf 100 Gew.-Teile Katalysatorvorstufe (1.2) 700 Gew.-Teile n-Heptan entfallen und

(1.3.2) in einer zweiten Unterstufe diese Suspension mit einer Lösung von 2 Gew.-Teilen Triethylbor (Atomverhältnis Chrom : Bor = 1:1) in 175 Gew.-Teilen n-Heptan wiederum bei 30 °C unter Rühren umgesetzt. Nach 30 Minuten wird die Suspension bei einer Temperatur von 80 °C unter vermindertem

Druck (10 Torr) in einem Rotationsverdampfer bis zur Trockene eingedampft.

Polymerisation mittels des Trägerkatalysators (1) sowie des Cokatalysators (2).

Ein Stahlautoklav mit 1 l Nutzvolumen und mit Rührer wird auf 95 ° C erhitzt und 10 Minuten mit trockenem Stickstoff gespült. Danach wird 2 ml einer 10 g n-Butyllithium als Cokatalysator (2) pro 1 l n-Heptan enthaltenden Lösung und 500 ml Isobutan in den Reaktor eingeführt und anschließend 2 bar Wasserstoff aufgepreßt. Durch Zufuhr von Ethen wird dann der Druck auf 40 bar erhöht und nach Einbringen von 80 mg des Trägerkatalysators (1) mit Hilfe einer Schleuse - entsprechend einem Atomverhältnis - Chrom im Trägerkatalysator : Lithium im Cokatalysator von 1:2,5 - während der Polymerisation aufrechterhalten. Nach 60 Minuten bei einer Polymerisationstemperatur von 95 ± 2 ° C wird der Autoklav unter Verdampfen des Isobutans und des nichtumgesetzten Ethens entspannt und das erhaltene Polymerisat entnommen.

Nähere Angaben zu dem so erhaltenen Verfahrensprodukt finden sich in der untenstehenden Tabelle.

Vergleichsbeisiel 1

Herstellen des Trägerkatalysators

Es wird in Identität zum Beispiel gearbeitet, mit der Ausnahme, daß die Umsetzung der Katalysatorvorstufe (1.2) mit Triethylbor nach (1.3) entfällt.

Polymerisation

Es wird in Identität zum Beispiel gearbeitet, mit der Ausnahme, daß nun als Cokatalysator neben 2 ml einer 10 g n-Butyllithium pro 1 l n-Heptan enthaltenden Lösung auch 2 ml einer 10 g Triethylbor pro 1 l n-Heptan enthaltenden Lösung in den Autoklaven vor Beginn der Polymerisation eingebracht werden. (Atomverhältnis Chrom : Bor = 1:2,8, Atomverhältnis Chrom : Lithium = 1:2,5).

Nähere Angaben zu dem hierbei erhaltenen Verfahrensprodukt finden sich ebenfalls in der Tabelle.

Vergleichsbeispiel 2

Herstellen des Trägerkatalysators

Es wird in Identität zum Beispiel gearbeitet, mit der Ausnahme, daß die Umsetzung der Katalysatorvorstufe (1.2) mit der 2,8fachen Menge Triethylbor (Atomverhältnis Chrom : Bor = 1:2,8) nach (1.3) erfolgt.

Polymerisation

Es wird in Identität zum Beispiel gearbeitet.

Nähere Angaben zu dem dabei erhaltenen Verfahrensprodukt sind wiederum der folgenden Tabelle zu entnehmen.

Tabelle

| | Produktivität[a)] (gPE/gKat.) | HLMI[b)] g/10 Min. | Polyethylenanteil (%) <0,5 mm |
|---|---|---|---|
| Beispiel | 1920 | 21,1 | 3,8 |
| Vergleichsbeispiel 1 | 1900 | 25,4 | 29,9 |
| Vergleichsbeispiel 2 | 950 | 19,1 | 15,3 |

[a)] Gramm Polymerisat pro Gramm Trägerkatalysator (1).
[b)] Nach DIN 53 735 bei 190 ° C/21,6 Kp.

Die in den Vergleichsversuchen erhaltenen Verfahrensprodukte besitzen bei ähnlichem Schmelzindex deutlich höhere Feinstaubanteile und im Vergleichsbeispiel 2 deutlich niedrigere Produktivität als das erfindungsgemäß hergestellte Verfahrensprodukt.

**Patentansprüche**

**1.** Verfahren zum Herstellen von Ethen-Homopolymerisaten sowie Ethen-Copolymerisaten mit untergeordneten Mengen an einpolymerisierten $C_3$- bis $C_{12}$-$\alpha$-Monoalkenen durch Polymerisation des bzw. der Monomeren bei Temperaturen von 30 bis 150 °C und Drücken von 2 bis 150 bar, durch Phillips-Katalyse mittels

(1) eines Trägerkatalysators aus einem Trägerstoff, der mit oxidisch vorliegendem Chrom, oxidisch vorliegendem Phosphor sowie oxidisch vorliegendem Aluminium beladen ist, und

(2) eines Cokatalysators,

wobei der Trägerkatalysator (1) erhalten worden ist, indem man

(1.1) in einer ersten Stufe ein mit den gewünschten Mengen Chrom, Phosphor sowie Aluminium beladenes Katalysator-Vorprodukt (1.1) herstellt aus

(1.1.a) einem feinteiligen, porösen, silikatischen Trägerstoff,

(1.1.b) einer ausgewählten, spezifischen Chromverbindung,

(1.1.c) einer ausgewählten, spezifischen Phosphorverbindung sowie

(1.1.d) einer ausgewählten, spezifischen Aluminiumverbindung,

und dann

(1.2) in einer zweiten Stufe das aus der ersten Stufe erhaltene Katalysatorvorprodukt (1.1) in einem wasserfreien, Sauerstoff in einer Konzentration von über 10 Vol.% enthaltene Gasstrom 10 bis 1000 Minuten auf einer Temperatur von 300 bis 900 °C hält, und so in den eigentlichen Trägerkatalysator (1) überführt,

dadurch gekennzeichnet, daß man

(1) einen Trägerkatalysator einsetzt, der erhalten worden ist, indem man

(1.1) in einer ersten Stufe ein Katalysator-Vorprodukt herstellt, indem man zunächst

(1.1.1) in einer ersten Unterstufe aus

(1.1.1.1) einem feinteiligen, porösen, silikatischen Trägerstoff, der einen Teilchendurchmesser von 1 bis 400 $\mu$m, ein Porenvolumen von 0,5 bis 3 $cm^3/g$ sowie eine Oberfläche von 100 bis 1000 $m^2/g$ besitzt, und

(1.1.1.2) einem inerten organischen Lösungsmittel

unter guter Durchmischung eine Suspension herstellt, mit der Maßgabe, daß auf 100 Gewichtsteile des Trägerstoffs (1.1.1.1) 150 bis 5000 Gewichtsteile des Lösungsmittels (1.1.1.2) entfallen, dann

(1.1.2) in einer zweiten Unterstufe

(1.1.2.1) in einem Lösungsmittel der unter (1.1.1.2) bezeichneten Art

(1.1.2.2) eine Chromverbindung der Formel

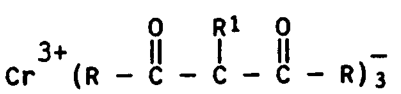 ,

worin stehen

R für eine Alkylgruppe, die nicht mehr als 12 Kohlenstoffamone aufweist, und

$R^1$ für eine Alkylgruppe, die nicht mehr als 12 Kohlenstoffatome aufweist, oder für Wasserstoff,

(1.1.2.3) mit einer Aluminiumverbindung der Formel $AlR^2_3$ - worin $R^2$ steht für eine Alkylgruppe, die nicht mehr als 12 Kohlenstoffatome aufweist -, unter guter Durchmischung bei einer Temperatur von 0 bis 100 °C vereinigt, mit der Maßgabe, daß auf 1 Gewichtsteil Chrom aus der Chromverbindung (1.1.2.2) 0,5 bis 10 Gewichtsteile Aluminium aus der Aluminiumverbindung (1.1.2.3) sowie 5 bis 500 Gewichtsteile Lösungsmittel (1.1.2.1) entfallen, und das Ganze 5 bis 300 Minuten bei der genannten Temperatur hält, hierauf

(1.1.3) in einer dritten Unterstufe

(1.1.3.1) die aus Unterstufe (1.1.1) resultierende Suspension mit

(1.1.3.2) einer Phosphorverbindung der Formel $P(O)(OR^3)_3$ oder $P(O)H(OR^3)_2$ - worin $R^3$ steht für eine Alkyl-, Aryl- oder Cycloalkylgruppe, die nicht mehr als 12 Kohlenstoffatome aufweist oder für Wasserstoff, mit der Maßgabe, daß mindestens ein R nicht für Wasserstoff steht - und

(1.1.3.3) dem aus Unterstufe (1.1.2) erhaltenen Produkt

unter guter Durchmischung bei einer Temperatur von 0 bis 60 °C vereinigt, mit der Maßgabe, daß auf 100 Gewichtsteile des Trägerstoffs (1.1.1.1) 0,1 bis 5 Gewichtsteile Chrom aus der Chromverbindung (1.1.2.2) sowie 0,5 bis 10 Gewichtsteile Phosphor aus der Phosphorverbindung (1.1.3.2) entfallen, und das Ganze 5 bis 300 Minuten bei der genannten Temperatur hält, und schließlich

(1.1.4) in einer vierten Unterstufe die in Unterstufe (1.1.3) gewonnene Suspension bei einer Temperatur von nicht mehr als 150 °C - gegebenenfalls unter vermindertem Druck - bis zur Trockene eindampft,

und dann

(1.2) in einer zweiten Stufe das aus der ersten Stufe (1.1) erhaltene Zwischenprodukt in die Katalysatorvorstufe überführt, indem man zunächst

(1.2.1) in einer ersten Unterstufe das aus der ersten Stufe (1.1) erhaltene Katalysator-Vorprodukt in einem wasserfreien Stickstoffstrom 60 bis 500 Minuten auf einer Temperatur von 150 bis 300 °C hält, hierauf

(1.2.2) in einer zweiten Unterstufe das aus Unterstufe (1.2.1) erhaltene Zwischenprodukt in einem wasserfreien, Sauerstoff in einer Konzentration von über 10 Vol.% enthaltenen Gasstrom 10 bis 1000 Minuten auf einer Temperatur von 300 bis 900 °C hält, und

(1.2.3) in einer dritten Unterstufe das aus Unterstufe (1.2.2) erhaltene Zwischenprodukt in einem wasserfreien Stickstoffstrom 10 bis 300 Minuten auf einer Temperatur von 50 bis 400 °C hält, und schließlich

(1.3) in einer dritten Stufe das aus der zweiten Unterstufe (1.2) erhaltene Katalysator-Vorprodukt in den eigentlichen Trägerkatalysator überführt, indem man

(1.3.1) in einer ersten Unterstufe das aus der zweiten Unterstufe (1.2) erhaltene Katalysatorvorprodukt in einem inerten Lösungsmittel suspendiert und

(1.3.2) in einer zweiten Unterstufe die aus Unterstufe (1.3.1) erhaltene Suspension mit einem Boralkyl der Formel $BR^4_3$ - worin steht $R^4$ für eine $C_1$- bis $C_{12}$-Alkylgruppe und wobei das Atomverhältnis von Chrom in der Katalysatorvorstufe (1.2) : Bor 1:0,01 bis 1:1 ist - bei Temperaturen von -40 bis 100 °C umsetzt sowie

(2) als Cokatalysator ein Lithiumalkyl der Formel $LiR^5$ - worin steht $R^5$ für eine $C_1$- bis $C_{12}$-Alkylgruppe, wobei das Atomverhältnis Chrom im Trägerkatalysator (1) zu Li im Cokatalysator (2) größer als 1:100 ist.

**2.** Trägerkatalysator (1) für die Phillips-Katalyse aus einem Trägerstoff, der mit oxidisch vorliegendem Chrom, oxidisch vorliegendem Phosphor sowie oxidisch vorliegendem Aluminium beladen ist, und der erhalten worden ist, indem man

(1.1) in einer ersten Stufe ein mit den gewünschten Mengen Chrom, Phosphor sowie Aluminium beladenes Katalysator-Vorprodukt (1.1) herstellt aus

(1.1.a) einem feinteiligen, porösen, silikatischen Trägerstoff,

(1.1.b) einer ausgewählten, spezifischen Chromverbindung,

(1.1.c) einer ausgewählten, spezifischen Phosphorverbindung sowie

(1.1.d) einer ausgewählten, spezifischen Aluminiumverbindung,

und dann

(1.2) in einer zweiten Stufe das aus der ersten Stufe erhaltene Katalysator-Vorprodukt (1.1) in einem wasserfreien, Sauerstoff in einer Konzentration von über 10 Vol.% enthaltene Gasstrom 10 bis 1000 Minuten auf einer Temperatur von 300 bis 900 °C hält und so in den eigentlichen Trägerkatalysator (1) überführt,

dadurch gekennzeichnet, daß der Trägerkatalysator erhalten worden ist, indem man

(1.1) in einer ersten Stufe ein Katalysator-Vorprodukt herstellt, indem man zunächst

(1.1.1) in einer ersten Unterstufe aus

(1.1.1.1) einem feinteiligen, porösen, silikatischen Trägerstoff, der einen Teilchendurchmesser von 1 bis 400 µm, ein Porenvolumen von 0,5 bis 3 $cm^3/g$ sowie eine Oberfläche von 100 bis 1000 $m^2/g$ besitzt, und

(1.1.1.2) einem inerten organischen Lösungsmittel

unter guter Durchmischung eine Suspension herstellt, mit der Maßgabe, daß auf 100 Gewichtsteile des Trägerstoffs (1.1.1.1) 150 bis 5000 Gewichtsteile des Lösungsmittels (1.1.1.2) entfallen, dann

(1.1.2) in einer zweiten Unterstufe aus

(1.1.2.1) in einem Lösungsmittel der unter (1.1.1.2) bezeichneten Art
(1.1.2.2) eine Chromverbindung der Formel

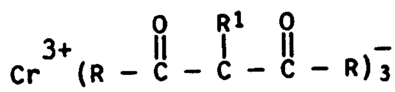 ,

worin stehen

R für eine Alkylgruppe, die nicht mehr als 12 Kohlenstoffatome aufweist, und

$R^1$ für eine Alkylgruppe, die nicht mehr als 12 Kohlenstoffatome aufweist, oder für Wasserstoff,

(1.1.2.3) mit einer Aluminiumverbindung der Formel $AlR^2_3$ - worin $R^2$ steht für eine Alkylgruppe, die nicht mehr als 12 Kohlenstoffatome aufweist -, unter guter Durchmischung bei einer Temperatur von 0 bis 100 °C vereinigt, mit der Maßgabe, daß auf 1 Gewichtsteil Chrom aus der Ghromverbindung (1.1.2.2) 0,5 bis 10 Gewichtsteile Aluminium aus der Aluminiumverbindung (1.1.2.3) sowie 5 bis 500 Gewichtsteile Lösungsmittel (1.1.2.1) entfallen, und das Ganze 5 bis 300 Minuten bei der genannten Temperatur hält, hierauf

(1.1.3) in einer dritten Unterstufe

(1.1.3.1) die aus Unterstufe (1.1.1) resultierende Suspension mit

(1.1.3.2) einer Phosphorverbindung der Formel $P(O)(OR^3)_3$ oder $P(O)H(OR^3)_2$ - worin $R^3$ steht für eine Alkyl-, Aryl- oder Cycloalkylgruppe, die nicht mehr als 12 Kohlenstoffatome aufweist oder für Wasserstoff, mit der Maßgabe, daß mindestens ein R nicht für Wasserstoff steht - und

(1.1.3.3) dem aus Unterstufe (1.1.2) erhaltenen Produkt

unter guter Durchmischung bei einer Temperatur von 0 bis 60 °C vereinigt, mit der Maßgabe, daß auf 100 Gewichtsteile des Trägerstoffs (1.1.1.1) 0,1 bis 5 Gewichtsteile Chrom aus der Chromverbindung (1.1.2.2) sowie 0,5 bis 10 Gewichtsteile Phosphor aus der Phosphorverbindung (1.1.3.2) entfallen, und das Ganze 5 bis 300 Minuten bei der genannten Temperatur hält, und schließlich

(1.1.4) in einer vierten Unterstufe die in Unterstufe (1.1.3) gewonnene Suspension bei einer Temperatur von nicht mehr als 150 °C - gegebenenfalls unter vermindertem Druck - bis zur Trockene eindampft,

und dann

(1.2) in einer zweiten Stufe das aus der ersten Stufe (1.1) erhaltene Zwischenprodukt in die Katalysatorvorstufe überführt, indem man zunächst

(1.2.1) in einer ersten Unterstufe das aus der ersten Stufe (1.1) erhaltene Katalysator-Zwischenstufe in einem wasserfreien Stickstoffstrom 60 bis 500 Minuten auf einer Temperatur von 150 bis 300 °C hält, hierauf

(1.2.2) in einer zweiten Unterstufe die aus Unterstufe (1.2.1) erhaltene Zwischenprodukt in einem wasserfreien, Sauerstoff in einer Konzentration von über 10 Vol.% enthaltenen Gasstrom 10 bis 1000 Minuten auf einer Temperatur von 300 bis 900 °C hält, und

(1.2.3) in einer dritten Unterstufe das aus Unterstufe (1.2.2) erhaltene Zwischenprodukt in einem wasserfreien Stickstoffstrom 10 bis 300 Minuten auf einer Temperatur von 50 bis 400 °C hält, und schließlich

(1.3) in einer dritten Stufe das aus der zweiten Unterstufe (1.2) erhaltene Katalysatorvorprodukt in den eigentlichen Trägerkatalysator überführt, indem man

(1.3.1) in einer ersten Unterstufe das aus der zweiten Unterstufe (1.2) erhaltene Katalysatorvorprodukt in einem inerten Lösungsmittel suspendiert und

(1.3.2) in einer zweiten Unterstufe die aus Unterstufe (1.3.1) erhaltene Suspension mit einem Boralkyl der Formel $BR^4_3$ - worin steht $R^4$ für eine $C_1$- bis $C_{12}$-Alkylgruppe und wobei das Atomverhältnis von Chrom in der Katalysatorvorstufe (1.2) : Bor 1:0,01 bis 1:1 ist - bei Temperaturen von -40 bis 100 °C umsetzt.

## Claims

**1.** A process for the preparation of ethene homopolymers and ethene copolymers with minor amounts of copolymerized $C_3$-$C_{12}$-α-monoalkenes by polymerization of the monomer or monomers at from 30 to

150 ° C and under from 2 to 150 bar by Phillips catalysis using

(1) a supported catalyst consisting of a carrier which is laden with chromium in oxide form, phosphorus in oxide form and aluminum in oxide form and

(2) a cocatalyst,

the supported catalyst (1) having been obtained by a method in which

(1.1) in a first stage, a catalyst intermediate (1.1) laden with the desired amounts of chromium, phosphorus and aluminum is prepared from

(1.1.a) a finely divided, porous silicate carrier,

(1.1.b) a selected, specific chromium compound,

(1.1.c) a selected, specific phosphorus compound and

(1.1.d) a selected, specific aluminum compound,

and then

(1.2) in a second stage, the catalyst intermediate (1.1) obtained in the first stage is kept in an anhydrous gas stream containing oxygen in a concentration of more than 10% by volume for from 10 to 1,000 minutes at from 300 to 900 ° C, and is thus converted into the actual supported catalyst (1),

wherein

(1) a supported catalyst is used which has been obtained by a procedure in which

(1.1) in a first stage, a catalyst intermediate is prepared by a method in which first

(1.1.1) in a first substage, a suspension is prepared from

(1.1.1.1) a finely divided, porous silicate carrier which has a particle diameter of from 1 to 400 $\mu$m, a pore volume of from 0.5 to 3 $cm^3/g$ and a specific surface area of from 100 to 1,000 $m^2/g$ and

(1.1.1.2) an inert organic solvent,

with thorough mixing, with the proviso that there are from 150 to 5,000 parts by weight of the solvent (1.1.1.2) per 100 parts by weight of the carrier (1.1.1.1), then

(1.1.2) in a second substage,

(1.1.2.1) in a solvent of the type defined under (1.1.1.2),

(1.1.2.2) a chromium compound of the formula

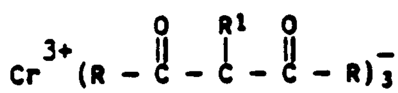

where R is alkyl of not more than 12 carbon atoms and $R^1$ is alkyl of not more than 12 carbon atoms or hydrogen, (1.1.2.3) is combined with an aluminum compound of the formula $AlR^2_3$, where $R^2$ is alkyl of not more than 12 carbon atoms, with thorough mixing at from 0 to 100 ° C, with the proviso that there are from 0.5 to 10 parts by weight of aluminum from the aluminum compound (1.1.2.3) and from 5 to 500 parts by weight of solvent (1.1.2.1) per part by weight of chromium from the chromium compound (1.1.2.2), and the entire mixture is kept for from 5 to 300 minutes at the stated temperature, then

(1.1.3) in a third substage,

(1.1.3.1) the suspension resulting from substage (1.1.1) is combined with

(1.1.3.2) a phosphorus compound of the formula $P(O)(OR^3)_3$ or $P(O)H(OR^3)_2$, where $R^3$ is alkyl, aryl or cycloalkyl of not more than 12 carbon atoms or hydrogen, with the proviso that one or more groups R are not hydrogen, and (1.1.3.3) the product obtained from substage (1.1.2) with thorough mixing at from 0 to 60 ° C, with the proviso that there are from 0.1 to 5 parts by weight of chromium from the chromium compound (1.1.2.2) and from 0.5 to 10 parts by weight of phosphorus from the phosphorus compound (1.1.3.2) per 100 parts by weight of the carrier (1.1.1.1), and the entire mixture is kept for from 5 to 300 minutes at the stated temperature, and finally

(1.1.4) in a fourth substage, the suspension obtained in substage (1.1.3) is evaporated to dryness at not more than 150 ° C, under atmospheric or reduced pressure, and then

(1.2) in a second stage, the intermediate obtained from the first stage (1.1) is converted into the catalyst intermediate by a method in which first

(1.2.1) in a first substage, the catalyst intermediate obtained from the first stage (1.1) is kept in an anhydrous stream of nitrogen for from 60 to 500 minutes at from 150 to 300 ° C, then

(1.2.2) in a second substage, the intermediate obtained from substage (1.2.1) is kept in an anhydrous gas stream containing oxygen in a concentration of more than 10% by volume for from 10 to 1,000 minutes at from 300 to 900 °C, and

(1.2.3) in a third substage, the intermediate obtained from substage (1.2.2) is kept in an anhydrous stream of nitrogen for from 10 to 300 minutes at from 50 to 400 °C, and finally

(1.3) in a third stage, the catalyst intermediate obtained from the second substage (1.2) is converted into the actual supported catalyst by a procedure in which

(1.3.1) in a first substage, the catalyst intermediate obtained from the second substage (1.2) is suspended in an inert solvent and

(1.3.2) in a second substage, the suspension obtained from substage (1.3.1) is reacted with an alkylboron of the formula $BR^4{}_3$, where $R^4$ is $C_1$-$C_{12}$-alkyl, the atomic ratio of chromium in the catalyst intermediate (1.2) to boron being from 1 : 0.01 to 1 : 1, at from -40 to 100 °C, and

(2) an alkyllithium of the formula $LiR^5$, where $R^5$ is $C_1$-$C_{12}$-alkyl, is used as the cocatalyst, the atomic ratio of chromium in the supported catalyst (1) to Li in the cocatalyst (2) being greater than 1 : 100.

**2.** A supported catalyst (1) for Phillips catalysis comprising a carrier which is laden with chromium in oxide form, phosphorus in oxide form and aluminum in oxide form, and which has been obtained by a method in which

(1.1) in a first stage, a catalyst intermediate (1.1) laden with the desired amounts of chromium, phosphorus and aluminum is prepared from

(1.1.a) a finely divided, porous silicate carrier,

(1.1.b) a selected, specific chromium compound,

(1.1.c) a selected, specific phosphorus compound and

(1.1.d) a selected, specific aluminum compound

and then

(1.2) in a second stage, the catalyst intermediate (1.1) obtained from the first stage is kept in an anhydrous gas stream containing oxygen in a concentration of more than 10% by volume for from 10 to 1,000 minutes at from 300 to 900 °C and is thus converted into the actual supported catalyst (1),

wherein the supported catalyst has been obtained by a method in which

(1.1) in a first stage, a catalyst intermediate is prepared by a method in which first

(1.1.1) in a first substage, a suspension is prepared from

(1.1.1.1) a finely divided, porous silicate carrier which has a particle diameter of from 1 to 400 µm, a pore volume of from 0.5 to 3 $cm^3/g$ and a specific surface area of from 100 to 1,000 $m^2/g$ and

(1.1.1.2) an inert organic solvent,

with thorough mixing, with the proviso that there are from 150 to 5,000 parts by weight of the solvent (1.1.1.2) per 100 parts by weight of the carrier (1.1.1.1), then

(1.1.2) in a second substage,

(1.1.2.1) in a solvent of the type defined under (1.1.1.2),

(1.1.2.2) a chromium compound of the formula

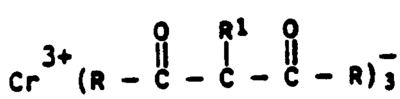

where R is alkyl of not more than 12 carbon atoms and $R^1$ is alkyl of not more than 12 carbon atoms or hydrogen, (1.1.2.3) is combined with an aluminum compound of the formula $AlR^2{}_3$, where $R^2$ is alkyl of not more than 12 carbon atoms, with thorough mixing at from 0 to 100 °C, with the proviso that there are from 0.5 to 10 parts by weight of aluminum from the aluminum compound (1.1.2.3) and from 5 to 500 parts by weight of solvent (1.1.2.1) per part by weight of chromium from the chromium compound (1.1.2.2), and the entire mixture is kept for from 5 to 300 minutes at the stated temperature, then

(1.1.3) in a third substage,

(1.1.3.1) the suspension resulting from substage (1.1.1) is combined with

(1.1.3.2) a phosphorus compound of the formula $P(O)(OR^3)_3$ or $P(O)H(OR^3)_2$, where $R^3$ is alkyl, aryl or cycloalkyl of not more than 12 carbon atoms or hydrogen, with the proviso that one or more groups R are not hydrogen, and

(1.1.3.3) the product obtained from substage (1.1.2)

with thorough mixing at from 0 to 60 °C, with the proviso that there are from 0.1 to 5 parts by weight of chromium from the chromium compound (1.1.2.2) and from 0.5 to 10 parts by weight of phosphorus from the phosphorus compound (1.1.3.2) per 100 parts by weight of the carrier (1.1.1.1), and the entire mixture is kept for from 5 to 300 minutes at the stated temperature, and finally

(1.1.4) in a fourth substage, the suspension obtained in substage (1.1.3) is evaporated to dryness at not more than 150 °C, under atmospheric or reduced pressure, and then

(1.2) in a second stage, the intermediate obtained from the first stage (1.1) is converted into the catalyst intermediate by a method in which first

(1.2.1) in a first substage, the catalyst intermediate obtained from the first stage (1.1) is kept in an anhydrous stream of nitrogen for from 60 to 500 minutes at from 150 to 300 °C, then

(1.2.2) in a second substage, the intermediate obtained from substage (1.2.1) is kept in an anhydrous gas stream containing oxygen in a concentration of more than 10% by volume for from 10 to 1,000 minutes at from 300 to 900 °C, and

(1.2.3) in a third substage, the intermediate obtained from substage (1.2.2) is kept in an anhydrous stream of nitrogen for from 10 to 300 minutes at from 50 to 400 °C, and finally

(1.3) in a third stage, the catalyst intermediate obtained from the second substage (1.2) is converted into the actual supported catalyst by a procedure in which

(1.3.1) in a first substage, the catalyst intermediate obtained from the second substage (1.2) is suspended in an inert solvent and

(1.3.2) in a second substage, the suspension obtained from substage (1.3.1) is reacted with an alkylboron of the formula $BR^4{}_3$, where $R^4$ is $C_1$-$C_{12}$-alkyl, the atomic ratio of chromium in the catalyst intermediate (1.2) to boron being from 1 : 0.01 to 1 : 1, at from -40 to 100 °C.

**Revendications**

**1.** Procédé de préparation d'homopolymères d'éthylène ainsi que de copolymères d'éthylène avec de faibles quantités d'$\alpha$-monoalcènes en $C_3$-$C_{12}$ en chaîne polymère, par polymérisation du ou des monomères à des températures de 30 à 150 °C et des pressions de 2 à 150 bar, par catalyse Phillips au moyen de

(1) un catalyseur supporté sur un support qui est chargé de chrome à l'état oxydé, de phosphore à l'état oxydé ainsi que d'aluminium à l'état oxydé, et

(2) un co-catalyseur,

le catalyseur supporté (1) étant préparé de la manière suivante

(1.1) dans une première étape, on prépare un pré-catalyseur (1.1) chargé des quantités désirées de chrome, de phosphore et d'aluminium, à partir de

(1.1.a) un support silicaté poreux en fines particules,

(1.1.b) un composé du chrome spécifique sélectionné,

(1.1.c) un composé du phosphore spécifique sélectionné

ainsi que

(1.1.d) un composé de l'aluminium spécifique sélectionné,

puis

(1.2) dans une deuxième étape, on maintient à une température de 300 à 900 °C pendant de 10 à 1000 mn le pré-catalyseur (1.1) obtenu dans la première étape, dans un courant gazeux anhydre contenant de l'oxygène à une concentration de plus de 10% en volume, pour qu'il se transforme en le catalyseur supporté (1) proprement dit,

caractérisé en ce que

(1) on utilise un catalyseur supporté qui a été préparé de la manière suivante

(1.1) dans une première étape, on prépare un pré-catalyseur, tout d'abord

(1.1.1) dans une première sous-étape, on prépare une suspension, sous un bon mélange, à partir

(1.1.1.1) d'un support silicaté poreux finement divisé qui présente un diamètre de particules de 1 à 400 µm, un volume de pores de 0,5 à 3 $cm^3/g$ ainsi qu'une surface spécifique de 100 à 1000 $m^2/g$, et

(1.1.1.2) d'un solvant organique inerte

en utilisant 150 à 5000 parties en poids du solvant (1.1.1.2) pour 100 parties en poids du support (1.1.1.1), puis

(1.1.2) dans une deuxième sous-étape, on réunit sous un bon mélange à une température de 0 à 100 °C

(1.1.2.1) dans un solvant selon la rubrique notée (1.1.1.2)

(1.1.2.2) un composé du chrome de formule

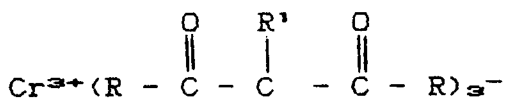

dans laquelle

R représente un groupement alkyle qui ne contient pas plus de 12 atomes de carbone et

$R^1$ représente un groupement alkyle qui ne présente pas plus de 12 atomes de carbone ou un atome d'hydrogène,

(1.1.2.3) avec un composé d'aluminium de formule $AlR^2{}_3$, dans laquelle $R^2$ est mis pour un groupement alkyle qui ne présente pas plus de 12 atomes de carbone,

en utilisant pour 1 partie en poids de chrome du composé du chrome (1.1.2.2) 0,5 à 10 parties en poids d'aluminium du composé d'aluminium (1.1.2.3) ainsi que 5 à 500 parties en poids du solvant (1.1.2.1) et on maintient le tout pendant 5 à 300 mn à la température indiquée, puis

(1.1.3) dans une troisième sous-étape, on réunit sous un bon mélange à une température de 0 à 60 °C

(1.1.3.1) la suspension résultant de la sous-étape (1.1.1) avec

(1.1.3.2) un composé du phosphore de formule $P(O)(OR^3)_3$ ou $P(O)H(OR^3)_2$, où $R^3$ est mis pour un groupement alkyle, aryle ou cycloalkyle qui ne contient pas plus de 12 atomes de carbone ou pour un atome d'hydrogène, pourvu que au moins l'un des substituants R ne soit pas mis pour l'hydrogène, et

(1.1.3.3) le produit résultant de la sous-étape (1.1.2),

pourvu que, pour 100 parties en poids du support (1.1.1.1), on utilise 0,1 à 5 parties en poids de chrome provenant du composé du chrome (1.1.2.2) ainsi que 0,5 à 10 parties en poids de phosphore provenant du composé du phosphore (1.1.3.2), et l'on maintient le tout pendant 5 à 300 mn à la température indiquée, et ensuite

(1.1.4) dans une quatrième sous-étape, on évapore jusqu'à siccité la suspension obtenue dans la sous-étape (1.1.3), à une température qui n'est pas supérieure à 150 °C, éventuellement sous pression réduite,

puis

(1.2) dans une deuxième étape, on transforme le produit intermédiaire obtenu dans la première étape (1.1) en le pré-catalyseur, de la manière suivante : d'abord

(1.2.1) dans une première sous-étape, on maintient le pré-catalyseur obtenu dans la première étape (1.1) sous atmosphère d'azote anhydre pendant 60 à 500 mn à une température de 150 à 300 °C, puis

(1.2.2) dans une deuxième sous-étape, on maintient le produit intermédiaire obtenu dans la sous-étape (1.2.1) dans un courant gazeux anhydre contenant de l'oxygène à une concentration de 10% en volume pendant de 10 à 1000 mn à une température de 300 à 900 °C, et

(1.2.3) dans une troisième sous-étape, on maintient le produit intermédiaire obtenu dans la sous-étape (1.2.2) dans un courant d'azote anhydre de 10 à 300 mn à une température de 50 à 400 °C, et ensuite

(1.3) dans une troisième étape, on transforme le pré-catalyseur obtenu dans la deuxième sous-étape (1.2) en le catalyseur supporté recherché, de la manière suivante

(1.3.1) dans une première sous-étape, on met le pré-catalyseur obtenu dans la deuxième sous-étape (1.2) en suspension dans un solvant inerte et

(1.3.2) dans une deuxième sous-étape, on fait réagir la suspension obtenue dans la sous-étape (1.3.1), avec un alkylbore de formule $BR^4{}_3$, dans laquelle $R^4$ est mis pour un groupement alkyle en $C_1$-$C_{12}$, le rapport atomique du chrome dans le pré-catalyseur (1.2) au bore étant de 1:0,01 à

1:1, à des températures de -40 à +100 °C, ainsi que

(2) comme co-catalyseur, un alkyllithium de formule $LiR^5$, dans laquelle $R^5$ est mis pour un groupement alkyle en $C_1$-$C_{12}$, le rapport molaire du chrome dans le catalyseur supporté (1) au lithium dans le co-catalyseur (2) étant supérieur à 1:100.

**2.** Catalyseur (1) pour la catalyse Phillips comportant un support qui est chargé de chrome à l'état oxydé, de phosphore à l'état oxydé ainsi que d'aluminium à l'état oxydé, et qui est préparé de la manière suivante

(1.1) dans une première étape, on prépare un pré-catalyseur (1.1) chargé des quantités désirées de chrome, de phosphore et d'aluminium, à partir de

(1.1.a) un support silicaté poreux en fines particules,

(1.1.b) un composé du chrome spécifique sélectionné,

(1.1.c) un composé du phosphore spécifique sélectionné

ainsi que

(1.1.d) un composé de l'aluminium spécifique sélectionné,

puis

(1.2) dans une deuxième étape, on maintient à une température de 300 à 900 °C pendant de 10 à 1000 mn le pré-catalyseur (1.1) obtenu dans la première étape, dans un courant gazeux anhydre contenant de l'oxygène à une concentration de plus de 10% en volume, pour qu'il se transforme en le catalyseur supporté (1) proprement dit,

caractérisé en ce que le catalyseur supporté a été préparé de la manière suivante

(1.1) dans une première étape, on prépare un pré-catalyseur, tout d'abord

(1.1.1) dans une première sous-étape, on prépare une suspension, sous un bon mélange, à partir

(1.1.1.1) d'un support silicaté poreux finement divisé qui présente un diamètre de particules de 1 à 400 µm, un volume de pores de 0,5 à 3 $cm^3/g$ ainsi qu'une surface spécifique de 100 à 1000 $m^2/g$, et

(1.1.1.2) d'un solvant organique inerte en utilisant 150 à 5000 parties en poids du solvant (1.1.1.2) pour 100 parties en poids du support (1.1.1.1), puis

(1.1.2) dans une deuxième sous-étape, on réunit sous un bon mélange à une température de 0 à 100 °C

(1.1.2.1) dans un solvant selon la rubrique notée (1.1.1.2)

(1.1.2.2) un composé du chrome de formule

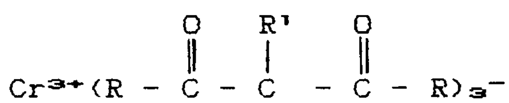

dans laquelle

R représente un groupement alkyle qui ne contient pas plus de 12 atomes de carbone et

$R^1$ représente un groupement alkyle qui ne présente pas plus de 12 atomes de carbone ou un atome d'hydrogène,

(1.1.2.3) avec un composé d'aluminium de formule $AlR^2_3$, dans laquelle $R^2$ est mis pour un groupement alkyle qui ne présente pas plus de 12 atomes de carbone,

en utilisant pour 1 partie en poids de chrome du composé du chrome (1.1.2.2) 0,5 à 10 parties en poids d'aluminium du composé d'aluminium (1.1.2.3) ainsi que 5 à 500 parties en poids du solvant (1.1.2.1) et on maintient le tout pendant 5 à 300 mn à la température indiquée, puis

(1.1.3) dans une troisième sous-étape, on réunit sous un bon mélange à une température de 0 à 60 °C

(1.1.3.1) la suspension résultante de la sous-étape (1.1.1) avec

(1.1.3.2) un composé du phosphore de formule $P(O)(OR^3)_3$ ou $P(O)H(OR^3)_2$, où $R^3$ est mis pour un groupement alkyle, aryle ou cycloalkyle qui ne contient pas plus de 12 atomes de carbone ou pour un atome d'hydrogène, pourvu que au moins l'un des substituants R ne soit pas mis pour l'hydrogène, et

(1.1.3.3) le produit résultant de la sous-étape (1.1.2),

pourvu que, pour 100 parties en poids du support (1.1.1.1), on utilise 0,1 à 5 parties en poids de chrome provenant du composé du chrome (1.1.2.2) ainsi que 0,5 à 10 parties en poids de

phosphore provenant du composé du phosphore (1.1.3.2), et l'on maintient le tout pendant 5 à 300 mn à la température indiquée, et ensuite

(1.1.4) dans une quatrième sous-étape, on évapore jusqu'à siccité la suspension obtenue dans la sous-étape (1.1.3), à une température qui n'est pas supérieure à 150 ° C, éventuellement sous pression réduite,

puis

(1.2) dans une deuxième étape, on transforme le produit intermédiaire obtenu dans la première étape (1.1) en le pré-catalyseur, de la manière suivante: d'abord

(1.2.1) dans une première sous-étape, on maintient le pré-catalyseur obtenu dans la première étape (1.1) sous atmosphère d'azote anhydre pendant 60 à 500 mn à une température de 150 à 300 ° C, puis

(1.2.2) dans une deuxième sous-étape, on maintient le produit intermédiaire obtenu dans la sous-étape (1.2.1) dans un courant gazeux anhydre contenant de l'oxygène à une concentration de 10% en volume pendant de 10 à 1000 mn à une température de 300 à 900 ° C, et

(1.2.3) dans une troisième sous-étape, on maintient le produit intermédiaire obtenu dans la sous-étape (1.2.2) dans un courant d'azote anhydre de 10 à 300 mn à une température de 50 à 400 ° C, et ensuite

(1.3) dans une troisième étape, on transforme le pré-catalyseur obtenu dans la deuxième sous étape (1.2) en le catalyseur supporté recherché, de la manière suivante

(1.3.1) dans une première sous-étape, on met le pré-catalyseur obtenu dans la deuxième sous-étape (1.2) en suspension dans un solvant inerte et

(1.3.2) dans une deuxième sous-étape, on fait réagir la suspension obtenue dans la sous-étape (1.3.1), avec un alkylbore de formule $BR^4{}_3$, dans laquelle $R^4$ est mis pour un groupement alkyle en $C_1$-$C_{12}$, le rapport atomique du chrome dans le pré-catalyseur (1.2) au bore étant de 1:0,01 à 1:1, à des températures de -40 à +100 ° C.